(19)

Europäisches
Patentamt
European
Patent Office
Office européen
des brevets

(11) **EP 4 481 343 A1**

(12) **EUROPEAN PATENT APPLICATION**

(43) Date of publication:
**25.12.2024 Bulletin 2024/52**

(21) Application number: **23180674.6**

(22) Date of filing: **21.06.2023**

(51) International Patent Classification (IPC):
*G01K 1/143* (2021.01)   *G01K 15/00* (2006.01)

(52) Cooperative Patent Classification (CPC):
**G01K 15/005; G01K 1/143**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ABB SCHWEIZ AG
5400 Baden (CH)**

(72) Inventors:
• **SCHROEDER, Karsten
32469 Petershagen (DE)**

• **ACKERMANN, Patric
64405 Fischbachtal (DE)**
• **GEBHARDT, Joerg
55130 Mainz (DE)**
• **DAAKE, Wilhelm
32469 Petershagen (DE)**
• **SOSALE, Guruprasad
80997 München (DE)**
• **DASGUPTA, Subhashish
560066 Bangalore (IN)**

(74) Representative: **Maiwald GmbH
Engineering
Elisenhof
Elisenstrasse 3
80335 München (DE)**

(54) **METHOD FOR CALIBRATING A SURFACE TEMPERATURE SENSING SYSTEM**

(57)    A method for calibrating a surface temperature sensing system (100), wherein

the surface temperature sensing system (100) is configured for determining a surface temperature of a measuring object (130); and

wherein the surface temperature sensing system (100) comprises a first surface adapter (120) and a temperature measurement unit (110); and

wherein the surface temperature sensing system (100) is configured to be mounted at the measuring object (130) by means of the first surface adapter (120), the method including:

thermally coupling the temperature measurement unit (110) to a surface of a calibration object (240) by means of a second surface adapter (220);

determining a temperature of the surface of the calibration object by means of the temperature measurement unit (110); and

determining a calibration value, based on a comparison of the determined temperature of the surface of the calibration object with a calibration temperature of the surface of the calibration object, for calibrating the surface temperature sensor (100).

Fig. 2

## Description

Background

The present invention relates generally to surface temperature sensing systems for use with industrial processes.

Determination of temperatures are vital for safe running of plants, as being one of the main control parameters for process control. Ensuring that temperature measurements of process media are accurate and repeatable is critical.

For determination of a temperature of a medium within a vessel surface temperature sensors are placed at a surface of a wall of a vessel in order to measure the temperature of this surface, and respectively determine the temperature of the medium at the other side of the wall. These need to be calibrated on a regular basis.

Description

A non-negligible number of noninvasive temperature measurement devices is in service in the industry. Currently calibrating these devices is typically done in oil- or water baths or in tube furnaces, where the sensing element itself is calibrated. Effects of an installation of these noninvasive temperature measurement devices at a measuring object on a measurement result or a measurement uncertainty is thereby neglected. Calibration of temperature sensors can be a major workload in the maintenance of an industrial plant, binding a considerable workforce.

Aspects of the present invention are related to a method for calibrating a surface temperature sensing system and a surface temperature sensing system for determining a surface temperature of a measuring object with subject matter as described in the independent claims. Advantageous modifications of the invention are stated in the dependent claims. All combinations of at least two of the features disclosed in the description, the claims, and the figures fall within the scope of the invention. In order to avoid repetition, features disclosed in accordance with the method shall also apply and be claimable in accordance with mentioned systems.

To achieve these and other advantages and in accordance with the purpose of the invention, as embodied and broadly described herein, there is provided a method for calibrating a surface temperature sensing system, wherein the surface temperature sensing system is configured for determining a surface temperature of a measuring object, and wherein the surface temperature sensing system comprises a first surface adapter and a temperature measurement unit; and wherein the surface temperature sensing system is configured to be mounted at the measuring object by means of the first surface adapter, the method including:

thermally coupling the temperature measurement unit to a surface of a calibration object by means of a second surface adapter;
determining a temperature of the surface of the calibration object by means of the temperature measurement unit; and determining a calibration value, based on a comparison of the determined temperature of the surface of the calibration object with a calibration temperature of the surface of the calibration object, for calibrating the surface temperature sensing system.

The surface temperature sensing system can be configured to determine a temperature of a measuring point at an outer surface of the measuring object and/or at an outer surface of the calibration object. The surface temperature sensing system can include a single sensor element, as e.g. a resistance temperature detector RTD, for determining the surface temperature or a plurality of sensor elements for determining the surface temperature and/or a sensor element for determining an environment temperature of the surface temperature sensing system. The surface temperature sensing system can be configured to determine the surface temperature model-based by means of signals generated by different sensor elements of the surface temperature sensing system.

The measuring object can be a wall of a vessel and/or a wall of a pipe or any other object, where the temperature of the surface shall be determined.

The calibration object can be a part of a wall of a vessel and/or a part of a wall of a pipe or an object, which is configured to provide a calibration temperature at its surface for calibrating the surface temperature sensing system. The calibration temperature can be a surface temperature of the calibration object, which is upfront known and/or determined using other measures.

The temperature measurement unit can include a single sensor element, as e.g. a resistance temperature detector RTD, for determining the surface temperature or a plurality of sensor elements for determining the surface temperature and/or a sensor element for determining an environment temperature. The plurality of sensing elements can be mounted within the temperature measurement unit by means of a structure that fixes the sensing elements. The sensing elements for sensing the respective surface temperature can be placed in such a way that, when the surface temperature sensing system and/or the temperature measurement unit is mounted at the respective object by means of the respective surface adapter, the sensing elements for determining the surface temperature are located close to the surface of interest.

The first surface adapter and/or the second surface adapter can include a mounting adapter, for mounting the surface temperature sensing system at the measuring object, and a neck tube for accommodating and/or mounting the temperature measurement unit to the mounting adapter. The neck tube can improve the assembly and/or the assembly of the surface temperature sensing system if the measuring object is surrounded by insulation material.

According to an aspect, the surface temperature sensing system can be configured to be mounted at an outer surface of the measuring object by means of the first measuring surface adapter. In a further step, the temperature measurement unit of the surface temperature sensing system can be dismounted from the surface temperature sensing system, which is configured accordingly and the temperature measurement unit can be mechanically and/or thermally coupled to an outer surface of the calibration object by means of a second surface adapter.

For calibration, the surface temperature of the calibration object determined by the temperature measurement unit can be compared to the calibration temperature Tcalibration, which can be provided upfront and the calibration value can be determined based on the difference of the determined surface temperature and the calibration temperature.

Advantageously, by using the described method, the entire unit of the surface temperature sensing system as mounted to the respective object can be taken into account for calibrating the surface temperature sensing system.

According to an aspect, the temperature measurement unit of the surface temperature sensing system can be placed at the surface of the calibration object for calibration and a set up for calibrating the surface temperature sensing system can be configured with an installation situation similar to the measurement object, wherein the second surface adapter is configured to mechanically and/or thermally match the first surface adapter for determining the calibration value. The calibration object can be configured like a fluid flowed, e.g. conveying, tube and/or as a dry calibrator. The similarity of the installation situation for calibration can mean that a mechanical and/or thermal condition of the temperature measurement unit is similar to a mechanical and/or thermal condition of the temperature measurement unit at the measuring object.

That is because a surface temperature sensing system can determine a surface temperature, wherein the determined value of the surface temperature can dependent on the thermal and/or mechanical condition of the surface temperature sensing system with the surface to be measured.

The thermal condition can dependent on a mechanical contact of the sensing system with the surface and/or a roughness of the surface, which can result from different surface treatments and/or a material of the surface to be measured and/or a coating of the surface to be measured and/or a corrosion condition of the surface to be measured and/or a surface curvature of the surface to be measured.

It can be understood, taking into account the dependencies mentioned above, that just calibrating a temperature sensor element of the surface temperature sensing system by, at least partially, inserting the surface temperature sensing system into an oil bath is not sufficient for precise calibrating the surface temperature sensing system for determining the surface temperature of the measuring object.

In such a case the sensing elements of the surface temperature sensing system are calibrated as such, e.g. in a water bath. This 'classic' calibration method can result in significant deviation of the determined surface temperature compared to a measurement situation at a measurement point, where the surface temperature sensing system or respectively the temperature measurement unit is not surrounded by a fluid that has the temperature of interest including close thermal contact to the respective temperature sensor element.

Such calibration tests can only account for individual sensor elements but not for the overall measurement system including the various thermal couplings, particularly to the surface of interest.

Advantageously the described method for calibration can take into account certain root causes for faulty determination of the surface temperature as mentioned above, wherein particularly some properties of the thermal condition can drift over time, opposite to the situation if the surface temperature sensing system is calibrated by using a liquid bath or fluid environment only.

By using the described method for calibrating the surface temperature sensing system a mechanical and thermal condition can be designed similar to a process condition, where the surface temperature sensing system is coupled to the measuring object. This calibration method can improve a robustness of the determination of a surface temperature using the surface temperature sensing system, because it can compensate manufacturing tolerances and/or installation errors and/or errors originated by a specific model to determine a surface temperature using signals of sensor elements of the surface temperature sensing system.

It is further advantageously, that by using the described method for calibrating, the calibration method can reveal problems of a thermal coupling of the surface temperature sensing system with the measuring object, particularly in a manufacturing environment and/or can reveal a change of the thermal coupling over time during productive usage of the surface temperature sensing system. The calibration method described can address a plurality of error sources to be compensated, including mounting and thermal resistances of internal thermal paths of the surface temperature sensing system, and the calibration method can be adopted in respect to an individual situation of the surface of interest. Therefore, the method provides a calibration with reduced uncertainty of the process medium temperature determination.

The described liquid bath procedure for calibration can cause problems for all types of surface temperature sensing systems, even if they include more than one temperature sensitive sensor and/or if they are model-based or not. A model-based surface temperature sensing system can determine the surface temperature of interest by extrapolating, which is based on sensor signals.

Using the calibration method as described in this specification device-specific thermal behavior of the mounted surface temperature sensing system can be taken into account during calibration and an output signal of the surface temperature sensing system can be calibrated towards a well-known calibration temperature of the calibration object, because the similarity of the mounting and similar error sources caused thereof are inherently considered.

Advantageously, a surface temperature sensing system configured for non-destructive detachable assembly and/or disassembly of the temperature measurement unit to/from the first surface adapter permits to calibrate the temperature measurement unit with less effort, because the first surface adapter can remain at the measuring object during the calibration process.

The method enables and can include to provide a service to industrial users of temperature measurement devices This provided service can save workforce of the industrial users, being most efficient. The service can include an inspection of the measurement point at the industrial site and/or receiving relevant parameters for performance of the method from the industrial user. The resulting knowledge about the situation can be used to perform one of the method for calibrating as described below. This relates, in particular, to the parameters of the method as described below, and includes all or a relevant subset of parameters, which physically influence the mechanical and thermal coupling of the noninvasive sensor to the surface and the process.

The service can further include to perform the calibration method with various setups, e.g. on site of the industrial user, e.g. close to the measurement location, or at the operating facility, e.g. in a lab at the customer location, or remotely, e.g. in a lab of the service vendor.

According to an aspect, a thermal state of a contact of the temperature measurement unit with the surface of the calibration object corresponds to a thermal state of a contact of the temperature measurement unit with the surface of the measuring object. The thermal state can describe a complete thermal condition of the temperature measurement unit in respect to a temperature field of the complete environment including the temperature of the surface to be determined and a related field of heat flows of the complete environment of the temperature measurement unit.

Using other words, a condition of the environment in respect to the temperature measurement unit during calibration can be equivalent in respect to the determination of the temperature of the surface of the calibration object to the condition of the environment during determination of the surface temperature of the measuring object.

According to an aspect, the thermal state of the contact of the temperature measurement unit with the surface of the measuring object and/or the thermal state of the contact of the temperature measurement unit with the surface of the calibration object can be characterised by a respective structure of a surface of the calibration object and/or a respective structure of a surface of the measuring object.

That can mean that the thermal state takes into account the complete structure of the arrangement for determining the surface temperature of the measuring object and/or the calibration object, particularly because the thermal state of the contact of the temperature measurement unit with the surface of the measuring object or the calibration object can influence a value of the respective surface temperature, which is determined by the surface temperature sensing system.

According to an aspect, the structure of the surface of the calibration object and/or the structure of the surface of the measuring object is characterised by a respective surface curvature and/or a respective material of the surface and/or a respective roughness of the surface and/or a respective coating of the surface and/or a respective corrosion condition of the surface.

The structure of the surface can influence the thermal state of the contact of the temperature measurement unit with the surface of the measuring object or the calibration object and the structure of the surface can influence a value of the respective surface temperature, which is determined by the surface temperature sensing system.

According to an aspect, the calibration object is a bulky calibration element and/or a calibration vessel wall and/or a calibration wall of a calibration tube.

The term vessel, as understood here, can include any wall separating a medium from the ambient, as for instance a tube, a pipe or a tank or container etc. The calibration vessel wall can include a part of a vessel. The calibration wall of the calibration tube can be the part of a tube. The temperature of the bulky calibration element and/or the calibration vessel wall and/or the calibration wall of a calibration tube can be controlled by heating elements and the heat can be transported to the surface by means of a fluid, e.g. water or oil or gas.

According to an aspect, the second surface adapter is configured to mechanically and/or thermally match the first surface adapter. Alternatively or additionally the second surface adapter is identical to the first surface adapter.

If the first surface adapter is identical to the second surface adapter, the complete surface temperature-sensing system is dismounted from the measuring object and mounted to the calibration object to perform the method for calibrating the surface temperature sensing system.

The first surface adapter matches the second surface adapter thermally if the condition for measuring the surface temperature at the respective objects corresponds in such a way that determining the respective surface temperature results in a temperature value, which is identical within certain temperature ranges. Preferably, temperature ranges for practical matching are within a range of 5 Degree Centigrade. More preferably, the temperature boundaries are within a range of 2 Degree Centigrade. Even more preferably, the temperature boundaries are within a range of 1 Degree Centigrade,

Additionally, thermal conditions of an environment of the second surface adapter during calibration can be configured to be comparable to an environment of the first surface adapter at the measuring object. Comparable thermal conditions of the environment during calibration to that of the first surface adapter at the measuring object can be, that a difference between the surface temperature of the measuring object respectively the calibration object to be determined and a respective ambient temperature is comparable. A comparable difference between the surface temperature of the respective object to be determined and a respective ambient temperature can be within a range of 70 Degree Centigrade. More preferably, the temperature range is within a range of 20 Degree Centigrade. Even more preferably, the temperature range is within a range of 10 Degree Centigrade

The first surface adapter matches mechanically the second surface adapter if both adapters are designed and configured the same way including a neck tube and/or amounting adapter.

According to an aspect, the surface temperature sensing system is configured for non-destructive detachable assembly and/or disassembly of the temperature measurement unit to/from the first surface adapter.

The first surface adapter and the temperature measurement unit of the surface temperature sensing system can be detachably connected, e.g. by a threaded fitting.

This enables a quick and safe detachment of the temperature measurement unit for calibrating. Especially, if the surface of the measuring object is thermally insulated, this is beneficial since no removal of the insulation is needed to unmount the temperature measurement unit, because the complete first surface adapter can remain at the measuring object. Particularly, if the first surface adapter includes a neck tube, which extends above the insulation. The second surface adapter can be configured for non-destructive detachable assembly and/or disassembly of the temperature measurement unit of the surface temperature sensing system to/from the second surface adapter.

According to an aspect, the temperature measurement unit is mechanically coupled to a surface of the calibration vessel wall with a calibration contact pressure, when mounted to the calibration object, by means of the second surface adapter. The calibration contact pressure can correspond to a measurement contact pressure of the temperature measurement unit with the surface of the measuring object, when the temperature measurement unit is mounted to the measuring object by means of the first surface adapter.

The thermal state of the contact of the temperature measurement unit with the respective surface can be characterised by the contact pressure. The corresponding contact pressure can be provided if a similar contact force during calibration is applied between the temperature measurement unit and the respective surface, e.g. by using a respective surface adapter during calibration, which is essentially of the same design as in the application.

According to an aspect, a surface temperature of the calibration object corresponds to a surface temperature of the measurement object and/or a calibration environment temperature corresponds to a measurement environment temperature and/or an insulation of the calibration object corresponds to an insulation of the measurement object.

The thermal state of the contact of the temperature measurement unit with the surface of the measuring object and/or the calibration object can be characterised by an object surface temperature and/or an environment temperature and/or an insulation of the respective object.

A corresponding object surface temperature and/or environment temperature can be a range of the temperature of one degree Celsius. Preferably, the temperature range is a difference of 5 Degree Centigrade. More preferably, the temperature range is a difference of 2 Degree Centigrade. Even more preferably, the temperature range is a difference of 1 Degree Centigrade.

A corresponding insulation can have the same thickness and the same structure for the calibration object as for the measuring object, particularly in respect to a thermal condition.

According to an aspect, the method for calibrating includes:

immersing the temperature measurement unit into a liquid, the liquid having a liquid calibration temperature. Additionally or alternatively the calibration value is additionally based on a comparison of a determined liquid temperature and the liquid calibration temperature determined by the temperature measurement unit. Preferably, the temperature measurement unit is partially immersed into the liquid, wherein the part of the temperature measurement unit, which is immersed into the liquid includes temperature sensor elements of the temperature measurement unit.

This additional step of the method for calibrating can identify a root cause of a deviation of the determined temperature of the surface of the calibration object and the calibration temperature, preferably by discrimination of temperature signals of sensor elements of the temperature measurement unit compared to the determined temperature of the surface of the calibration object.

According to an aspect, the temperature measurement unit comprises a contact sensor and a reference sensor, wherein the temperature measurement unit is configured such that the contact sensor is thermally coupled closer to the surface of the measurement object and/or closer to the surface of the calibration object than the reference sensor, when respectively mounted, and the temperature of the calibration object is determined based on a temperature value determined using the contact sensor and a temperature value using the reference sensor.

According to an aspect, the calibration value comprises a calibration ratio of the temperature value generated by the reference sensor and the temperature value generated by the contact sensor.

Determination of the calibration ratio can detect faulty conditions of the surface temperature sensing system when determining the surface temperature, because a faulty condition, as e.g. water within the surface adapter can change this calibration ratio. The temperature value of the reference sensor and/or the contact sensor can be a signal generated by the respective sensors.

According to an aspect, the calibration value is based on a comparison of the calibration ratio and a measurement ratio, wherein the measurement ratio is defined by the temperature value generated by the reference sensor and the temperature value generated by the contact sensor of the temperature measurement unit coupled to the surface of the measurement object by means of the first surface adapter; and wherein preferably the measurement ratio is determined upfront of the steps of the method for calibrating the surface temperature sensing system, as described above.

Comparison of the calibration ratio and the measurement ratio can detect faulty conditions of the surface temperature sensing system and/or recalibrate the surface temperature sensing system, when determining the surface temperature at the measuring object, because a faulty condition, as e.g. water within the first surface adapter can change the calibration ratio.

According to an aspect, the method for calibration can be performed close to the measuring object using a signally coupling means of the surface temperature sensing system at a manufacturing site, when performing one of the methods for calibration as described above.

That means, that thermally coupling the temperature measurement unit of the surface temperature sensing system to the surface of a calibration object by means of a second surface adapter can be performed close to the measuring object in such a way that the signal coupling means and/or the means for determining the temperature used at the manufacturing site for signal coupling of the temperature measurement unit of the surface temperature sensing system can be used during the calibration method for determining a temperature of the surface of the calibration object.

A method for calibrating a surface temperature sensing system (100), wherein

the surface temperature sensing system (100) is configured for determining a surface temperature of a measuring object (130); and
wherein the surface temperature sensing system (100) comprises a first surface adapter (120) and a temperature measurement unit (110); and
wherein the surface temperature sensing system (100) is configured to be mounted at the measuring object (130) by means of the first surface adapter (120), the method comprising:

thermally coupling the temperature measurement unit (110) to a surface of a calibration object (240) by means of a second surface adapter (220);
determining a temperature of the surface of the calibration object by means of the temperature measurement unit (110); and
determining a calibration value, based on a comparison of the determined temperature of the surface of the calibration object with a calibration temperature of the surface of the calibration object, for calibrating the surface temperature sensing system (100).

A surface temperature sensing system for determining a surface temperature of a measuring object is proposed. The surface temperature sensing system including: a temperature measurement unit and a first surface adapter, wherein the surface temperature sensing system is configured for non-destructive disassembly of the temperature measurement unit with the first surface adapter. The surface temperature sensing system can be configured to be calibrated according to any one of claim 1 to 13, by means of a second surface adapter, which is configured to mechanically and/or thermally match the first surface adapter.

According to an aspect, the surface temperature sensing system is configured for non-destructive detachable assembly and/or disassembly of the temperature measurement unit to/from the first surface adapter.

According to an aspect, the first surface adapter is identical to the second surface adapter.

According to an aspect, the temperature measurement unit of the surface temperature sensing system includes a contact sensor and a reference sensor. The temperature measurement unit of the surface temperature sensing system is configured such that the contact sensor is thermally coupled closer to the surface of the measuring object and/or the calibration object than the reference sensor, when respectively mounted. The surface temperature of the measuring object and/or the surface temperature of the calibration object is determined based on a temperature signal measured by the contact sensor and a temperature signal measured by the reference sensor.

That means that the surface temperature sensing system can include at least one sensing element for determining a surface temperature of a respective object.

The surface temperature sensing system can be configured to determine and/or to estimate a temperature for the surface of the respective object, particularly based on temperature signals generated by a plurality of sensor elements. The plurality of sensor elements can be calibrated using the described method for calibration.

A use of a surface temperature sensing system, as described above, is proposed for determining a temperature of a measuring point on an outer surface of a measuring object as described above. Preferably, the surface temperature sensing system can be used for calibration as described above.

A calibration system is proposed, including a plurality of calibration objects, wherein each calibration object is configured to provide a surface for calibration, and wherein each calibration object is configured to provide at its surface a calibration temperature, which is suitable for calibration.

The calibration temperature is suitable for calibration if the temperature of the surface is defined within a range of 1°C. The calibration system can be a calibration rig.

According to an aspect, the calibration system can include a plurality of second surface adapters, which are configured for the calibration method as described above.

According to an aspect, each of the plurality of second surface adapters can include a neck tube for mounting a temperature measurement unit for calibrating as described above.

According to an aspect, the calibration system can include a water circulation arrangement for tempering the surfaces of the calibration objects.

The calibration system water calibration can be a system, which is configured to permanently provide a plurality of calibration objects, with the plurality of thermal states as described above. The plurality of calibration objects can be selected according to often-used calibration objects, which can provide different surface structures, particularly with different surface curvature and/or different materials and/or different thickness, preferably according to measurement objects of typical applications.

Advantageously, the calibration system can provide a plurality of calibration objects such that re-arrangements of calibration objects, as e.g. pipe surfaces, is needed any more.

The temperature measurement unit can comprise a standard inset rod made of a well-known material to enclose sensing elements. Using such rods make sure that one side of the thermal contact for defining a thermal contact resistance is always well known and defined. This removes uncertainty and variance from the application cases, which can be beneficial for the accuracy. That is because the thermal resistance depends, e.g., on the contact pressure, the contact surface's size, surface structure, surface roughness, and/or on the material of the surfaces to be measured.

The material of the inset rod can be, for example, stainless steel or copper or silver, or combinations of them.

If the surface, where the temperature is to be measured, comprises a specific material, preferably the calibration setup comprises a test surface made of the same material. One may use a collection of adapters or a collection of pipes in the calibration rig.

Advantageously, for a non-invasive measurement method it is remarkably easy to essentially reproduce the measurement point situation in a simple setup for calibration, when compared to temperature determination using thermowells, where the geometrical complexity and large variety of the application designs prevent a similar approach for calibration.

According to an aspect, the calibration system can be configured to be provided by a thermal insulation during calibration, wherein particularly the thermal insulation can match the thermal insulation of the measuring object.

The surface temperature sensing system can be used to determine a temperature of a process fluid within a vessel without the need to penetrate a process vessel wall at the surface of the vessel wall.

The surface temperature sensing system can include a temperature measurement unit and a first or second surface adapter to position the temperature measurement unit on an exterior surface of the measuring object as for instance a vessel wall. As the process fluid temperature changes, the vessel wall temperature will also change. The vessel wall temperature can also change in response to changed ambient conditions, such as sunlight, wind, or rain. Insulation of the surface temperature sensing system can provide some shielding of the exterior surface and/or the surface temperature sensing system from changes in ambient conditions. However, to the extent, the insulation is less than ideal, the accuracy of non-intrusive process temperature measurements is impaired. To improve the surface temperature measurement using the surface temperature sensing system, the surface temperature sensing system can include an ambient temperature measurement sensor and a reference temperature sensor, which is in an at least slightly different thermal contact to the surface and the surface temperature measurement sensor. The temperature measurement sensor is usually distinguished by the property that its thermal coupling to the surface is chosen to be stronger, that means with lower thermal resistance, than for the one or several reference temperature sensors.

A tip of the surface temperature sensing system can be contacted directly to a surface of a measuring object like a pipe and/or surface of the vessel wall, whose surface temperature is to be determined. The heat transfer resistance of the surface to the tip of a thermometer rod of the surface temperature sensing system can advantageously be reduced by a surface pressure generated at the measuring tip. This can be done, for example, by a spring-loaded mechanism and/or screw mechanism and/or any mechanism of the surface temperature sensing system, which is configured to apply consistent pressure.

The temperature measurement sensor can be distinguished from the reference temperature sensor by its property that the thermal coupling of the sensing element of the temperature measurement sensor to the surface is chosen to be stronger, that means, having a lower thermal resistance, than for one or several reference temperature sensors.

In detail, the at least one temperature measurement sensor is connected to a first measuring site on the outer surface of the measuring object via a coupling with good thermal conductivity, characterised by a thermal resistance R0.

The temperature measurement sensor can have a well-defined thermal resistance Ru to the ambient, which can be characterised by an ambient temperature.

The respective reference temperature sensor advantageously can have a well-defined thermal resistance R0_ref to a second measuring site at the surface of the vessel and a well-defined thermal resistance Ru_ref to the ambient, which can be characterised by an ambient temperature. In case of a standard thermometer rod, this thermal resistance is approximately proportional to the length of the rod between the respective temperature measuring site of the reference temperature sensor and an ambient, as for instance at a location of the electronics housing.

The thermal resistance Ru and/or Ru_ref also include the conductive, convective and radiative resistance between the outer surface of the standard thermometer rod and/or neck tube and ambient air.

That means that the reference temperature sensor can be thermally coupled to the surface of the vessel wall in such a way, that the thermal resistance between the reference temperature sensor and the surface of the vessel wall is higher than the thermal resistance between the measurement temperature sensor and the surface of the vessel wall at their respective sites.

The temperature measurement sensor can be coupled to the surface of the measuring object to be characterized by a thermal resistance R0 that is smaller than a thermal resistance R0_ref between surface of the vessel wall and the reference temperature sensor.

Particularly: R0_ref ≠ R0 and/or Ru_ref ≠ Ru and/or the ratio Ru_ref / R0_ref of the thermal resistances of the reference sensor to the environment or to the surface is chosen slightly different from the above mentioned Ru/R0: Ru_ref / R0_ref ≠ Ru/RO.

In this case:

$$R1 = R0\_ref - R0 , \quad and \quad R2 = Ru\_ref$$

can be defined and compensation can be carried out in the same way as suggested in WO2019/063519.

Advantageous ratios of R2/R1 can be, for example 100, 50, 10 or 2.

According to an aspect, the temperature sensor assembly includes a plurality of temperature measurement sensor is and/or a plurality of reference temperature sensors.

The surface temperature can be determined by the formula:

$$T\_surface = T1 + a\ (T1-T2) + b\ (T2-T\_amb) + c\ T1 + d\ T2 + e\ T\_amb + f(T1,T2,T\_amb)$$

wherein a, b, c, d, e are constants to be defined by calibration, wherein each of this constant can be determined to be 0. The relationship: f(T1,T2,T_amb) can be a freely definable, e.g. non-linear, function, which can be determined to be zero.

T1 is a temperature value determined by using the temperature measurement sensor and T2 is a temperature value determined by using the reference temperature sensor and T_amb is an ambient temperature value.

For determining a temperature of a medium inside the vessel, using the temperature sensor assembly, which is non-invasive, a model-based calculation can be used based on a temperature reading determined using the temperature sensor assembly to accurately determine the surface temperature of the surface of the vessel wall.

The medium can be any fluid including a liquid and/or gas and/or a bulk material or any mixture of these like aerosols and multi-phase flows.

The model-based calculation can be performed by a software tool that determines the medium temperature based on the outer surface temperature of the vessel wall determined by the non-invasive temperature sensor assembly.

The determination of the temperature can be done accordingly to the method as disclosed in the patent application WO2019063519 A1.

According to an aspect, the reference temperature sensor is coupled to the surface of the wall of the vessel by a spatial gap and/or by a second means for thermal coupling the reference sensor to the surface of the wall of the vessel comprising a low thermal conductive material for thermal at least partially decoupling the reference sensor to the surface of the wall of the vessel, and wherein the second means is located between the reference temperature sensor and the surface of the wall of the vessel.

Such a spatial gap can couple the reference temperature sensor to the surface of the wall of the vessel without mechanical contact to define the thermal contact resistance R0_ref.

According to an aspect, the temperature measurement sensor and/or the reference temperature sensor comprises a resistance thermometer and/or a thermocouple. Such resistance thermometer can be a PTC-thermistor and/or a PTC-resistor. Additionally or alternatively, the temperature measurement sensor and/or the reference temperature sensor can include any means to determine a temperature of the surface of the vessel.

Brief description of the drawings

The accompanying drawings, which are included to provide a further understanding of the invention and are incorporated in and constitute a part of this application, illustrate embodiments of the invention and together with the description serve to explain the principle of the invention. The drawings display:

Figure 1    a schematic sketch of a surface temperature sensing system thermally coupled to a surface of a measuring object;

Figure 2    a schematic sketch of a temperature measurement unit thermally coupled to a surface of a calibration object;

Figure 3    a schematic sketch of another surface temperature sensing system thermally coupled to a surface of a measuring object;

Figure 4    a schematic sketch of another temperature measurement unit thermally coupled to a surface of a calibration object;

Figure 5    a schematic sketch of a mounting adapter.

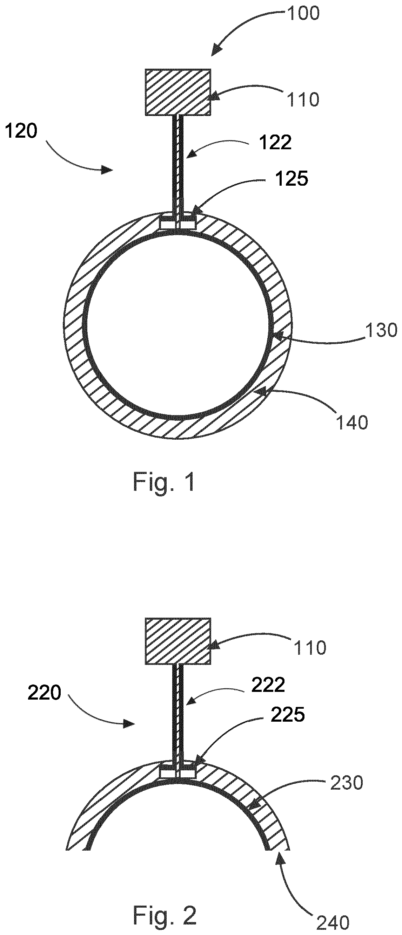

Figure 1 sketches schematically a surface temperature sensing system 100 for determining a surface temperature of a measuring object, which is thermally coupled to a surface of a measuring object 130, which in this example is a pipe or a vessel drawn as cross section. The measuring object 130 is thermally insulated by an insulation layer 140.

The surface temperature sensing system 100 is mounted and thermally coupled to the measuring object 130 by means of its first surface adapter 120, including a neck tube 122 and a mounting adapter 125. The temperature measurement unit 110 can include an insert rod and a housing, which includes a temperature determination circuitry. The insert rod can include a plurality of sensor elements, which are signally coupled to the temperature determination circuitry. For non-destructive disassembly of the temperature measurement unit 110 with the first surface adapter 120, the temperature measurement unit 110 can be coupled to the surface adapter 120 by a mechanical joint.

Figure 2 sketches schematically the temperature measurement unit 110 of the surface temperature sensing system 100 mechanically and thermally coupled by a second surface adapter 220 to a surface of a calibration object 240 for calibrating the surface temperature sensing system 100. The calibration object 240 can be tempered by a thermostat unit to provide a calibration temperature at its surface, which is not shown in this figure 2. The surface of the calibration object 240 can be provided by a surface curvature, which matches the curvature of the measuring object 130 as shown in figure 1. The calibration object 130 can be thermally insulated by an insulation layer 240 to match the thermal insulation of the measuring object.

The second surface adapter 220 can include a neck tube 222 and a mounting adapter 225. The temperature measurement unit 110 can include an insert rod and a housing, which includes a temperature determination circuitry. The insert rod can include a plurality of sensor elements, which are signally coupled to the temperature determination circuitry. The temperature measurement unit 110 can be configured to be mechanically coupled to the second surface adapter 224 for non-destructive assembly and disassembly, e.g. by a mechanical joint.

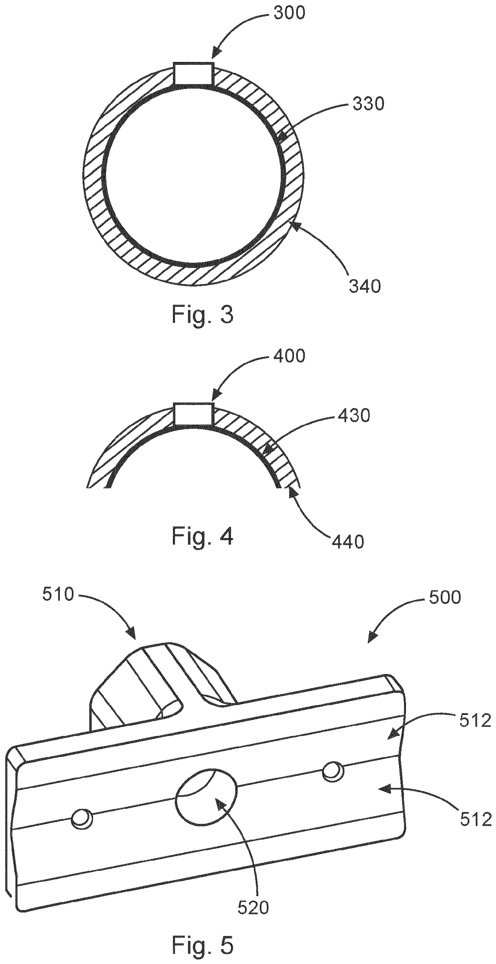

Figure 3 sketches schematically a surface temperature sensing system, which is mechanically and thermally coupled by a first surface adapter 300 to a surface of the measuring object 330. The surface temperature sensing system 300 corresponds completely to the surface temperature sensing system 100 of figure 1 but without a neck tube of the second surface adapter.

Figure 4 sketches schematically a temperature measurement unit of the surface temperature sensing system 300 mechanically and thermally coupled by a second surface adapter 400 to a surface of calibration object 430, wherein the calibration object 430 is thermally insulated by an insulation layer 440. The calibration of the temperature measurement unit 400 corresponds completely to the calibration of the temperature measurement unit 110 of figure 2, but without a neck tube of the second surface adapter.

Figure 5 schematically sketches a mounting adapter 500, which can be mechanically coupled to the measuring object and/or the calibration object. By means of the contact surfaces 512, the surface adapter 500 can be aligned to a curved surface of the measuring object and/or a calibration object. A neck tube, which is not shown in figure 5, can be mechanically coupled to the surface adapter 500 via a socket 510. The temperature measurement unit can be guided by the neck tube and mechanically and/or thermally coupled to the surface of the measuring object and/or the calibration object by passing through the hole 520.

## Claims

1. A method for calibrating a surface temperature sensing system (100), wherein

   the surface temperature sensing system (100) is configured for determining a surface temperature of a measuring object (130); and
   wherein the surface temperature sensing system (100) comprises a first surface adapter (120) and a temperature measurement unit (110); and
   wherein the surface temperature sensing system (100) is configured to be mounted at the measuring object (130) by means of the first surface adapter (120), the method comprising:

      thermally coupling the temperature measurement unit (110) to a surface of a calibration object (240) by means of a second surface adapter (220);
      determining a temperature of the surface of the calibration object by means of the temperature measurement unit (110); and
      determining a calibration value, based on a comparison of the determined temperature of the surface of the calibration object with a calibration temperature of the surface of the calibration object, for calibrating the surface temperature sensing system (100).

2. The method according claim 1, wherein a thermal state of a contact of the temperature measurement unit (110) with the surface of the calibration object corresponds to a thermal state of a contact of the temperature measurement unit (110) with the surface of the measuring object.

3. The method according claim 2, wherein the thermal state of the contact of the temperature measurement unit (110) with the surface of the measuring object and/or the thermal state of the contact of the temperature measurement unit (110) with the surface of the calibration object is **characterised by** a respective structure of a surface of the calibration object and/or a respective structure of a surface of the measuring object.

4. The method according to claim 3, wherein the structure of the surface of the calibration object and/or the structure of the surface of the measuring object is **characterised by** a respective surface curvature and/or a respective material of the surface and/or a respective roughness of the surface and/or a respective coating of the surface and/or a respective corrosion condition of the surface.

5. The method according to any one of the preceding claims, wherein the calibration object (240) is a bulky calibration element and/or a calibration vessel wall.

6. The method according to any one of the preceding claims, wherein the second surface adapter (220) is configured to mechanically and/or thermally match the first surface adapter (120); and/or the second surface adapter (220) is identical to the first surface adapter (120).

7. The method according to any one of the preceding claims, wherein the surface temperature sensing system (100) is configured for non-destructive detachable assembly and/or disassembly of the temperature measurement unit (110) to/from the first surface adapter (120).

8. The method according to any one of the preceding claims, wherein the temperature measurement unit (110) is mechanically coupled to a surface of the calibration vessel wall with a calibration contact pressure, when mounted to the calibration object (240), by means of the second surface adapter (220); and wherein the calibration contact pressure corresponds to a measurement contact pressure of the temperature measurement unit (110) with the surface of the measuring object, when mounted to the measuring object (240) by means of the first surface adapter (120).

9. The method according to any one of the preceding claims, wherein a surface temperature of the calibration object (240) corresponds to a surface temperature measurement object (140) and/or a calibration environment temperature corresponds to a measurement environment temperature and/or an insulation of the calibration object corresponds to an insulation of the measurement object.

10. The method according to any one of the preceding claims, comprising:
immersing the temperature measurement unit (110) into a liquid, the liquid having a liquid calibration temperature; and/or wherein the calibration value is additionally based on a comparison of a determined liquid temperature and the liquid calibration temperature determined by the temperature measurement unit (110).

11. The method according to any one of the preceding claims, wherein the temperature measurement unit (110) comprises a contact sensor and a reference sensor, wherein the temperature measurement unit (110) is configured such that the contact sensor is thermally coupled closer to the surface of the measurement object (140) and/or closer to the surface of the calibration object (240) than the reference sensor, when respectively mounted; and the temperature of the calibration object (240) is determined based on a temperature value determined using the contact sensor and a temperature value using the reference sensor.

12. The method according to claim 11, wherein the calibration value comprises a calibration ratio of the temperature value generated by the reference sensor and the temperature value generated by the contact sensor.

13. The method according to claim 12, wherein the calibration value is based on a comparison of the calibration ratio and a measurement ratio, wherein the measurement ratio is defined by a temperature value generated by the reference sensor and a temperature value generated by the contact sensor of the temperature measurement unit coupled to the surface of the measurement object by means of the first surface adapter (120); and wherein preferably the measurement ratio is determined upfront of the steps of the method for calibrating the surface temperature sensing system according to any one of claim 1 to 12.

14. A surface temperature sensing system (100) for determining a surface temperature of a measuring object (140); the surface temperature sensing system comprising:

a temperature measurement unit (110); and
a first surface adapter (120), wherein the surface temperature sensing system (100) is configured for non-destructive disassembly of the temperature measurement unit (110) with the first surface adapter (120); and wherein the surface temperature sensing system is configured to be calibrated according to any one of claim 1 to 13, by means of a second surface adapter (220), which is configured to mechanically and/or thermally match the first surface adapter (120).

15. The surface temperature sensing system (100) according to claim 14, comprising:

a contact sensor; and
a reference sensor; and wherein the temperature measurement unit is configured such that the contact sensor is thermally coupled closer to the surface of the measuring object and/or the calibration object than the reference sensor, when respectively mounted; and wherein the surface temperature of the measuring object (140) and/or the surface temperature of the calibration object (240) is determined based on a temperature signal measured by the contact sensor and a temperature signal measured by the reference sensor.

Fig. 1

Fig. 2

Fig. 3

Fig. 4

Fig. 5

Europäisches
Patentamt

European
Patent Office

Office européen
des brevets

# EUROPEAN SEARCH REPORT

Application Number

EP 23 18 0674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 20 2010 013086 U1 (LABOM MES UND REGELTECHNIK GMBH [DE]) 21 April 2011 (2011-04-21) * abstract; figures * * paragraphs [0004] – [0007], [0038], [0043] – [0058] * | 1-15 | INV. G01K1/143 G01K15/00 |
| X | DE 10 2005 040699 B3 (LABOM MES UND REGELTECHNIK GMB [DE]) 11 January 2007 (2007-01-11) * abstract; figures 1,5 * * paragraphs [0034] – [0040] * | 1-15 | |
| A | US 2023/030690 A1 (GEBHARDT JOERG [DE] ET AL) 2 February 2023 (2023-02-02) * abstract; figures 1,2 * * paragraphs [0006] – [0009], [0021] – [0026] * | 1,11-15 | |

TECHNICAL FIELDS
SEARCHED      (IPC)

G01K

The present search report has been drawn up for all claims

| Place of search | Date of completion of the search | Examiner |
|---|---|---|
| The Hague | 28 November 2023 | de Bakker, Michiel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 18 0674

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2023

| Patent document cited in search report | Publication date | Patent family member(s) | | Publication date |
|---|---|---|---|---|
| DE 202010013086 U1 | 21-04-2011 | NONE | | |
| DE 102005040699 B3 | 11-01-2007 | NONE | | |
| US 2023030690 A1 | 02-02-2023 | CN 115701529 A | | 10-02-2023 |
| | | EP 4130694 A1 | | 08-02-2023 |
| | | US 2023030690 A1 | | 02-02-2023 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019063519 A

- WO 2019063519 A1